Europäisches Patentamt

European Patent Office

Office européen des brevets

(11) Publication number: 0 196 739
A2

# (12) EUROPEAN PATENT APPLICATION

(21) Application number: 86300489.1

(22) Date of filing: 24.01.86

(51) Int. Cl.⁴: B 67 D 3/00
A 47 J 47/01, G 01 F 11/44

(30) Priority: 29.03.85 US 717575

(43) Date of publication of application:
08.10.86 Bulletin 86/41

(84) Designated Contracting States:
AT DE FR GB NL SE

(71) Applicant: ALADDIN INDUSTRIES, INCORPORATED
703 Murfreesboro Road P.O. Box 100255
Nashville Tennessee 37210(US)

(72) Inventor: Meador, Donald X.
802 Esslinger Road
Huntsville Alabama 35802(US)

(72) Inventor: Scott, Ralph W.
Route 2 Box 40
Bon Aqua Tennessee 37025(US)

(74) Representative: Adams, William Gordon et al,
RAWORTH, MOSS & COOK 36 Sydenham Road
Croydon Surrey CR0 2EF(GB)

(54) Liquid dispensing apparatus.

(57) A liquid dispensing apparatus is provided for the heating and portion controlled dispensing of liquids, such as soups, having solids mixed therein. The apparatus is provided with a heated reservoir for the storage and heating of the liquid and a heated valve for dispensing. The valve is provided with a cylindrical rotor having seals to prevent leakage and an interior cavity that functions as a portion control dispenser. The rotor and rotor seals are heated by the valve heating elements. An electrical system controls heating of the reservoir and rotation of the rotor to dispense liquid.

FIG.2

Croydon Printing Company Ltd.

-1-

LIQUID DISPENSING APPARATUS
Background of the Invention

The present invention relates generally to systems that heat liquids, and liquids with solids mixed therein, and delivers a portion of the mixture on command. In particular it relates to soup dispensers used to cook and heat soups, and deliver a controlled portion of the soup into an appropriate serving container.

In the food service industry it is desirable to prepare a large amount of soup that is kept heated and drawn from during the day. It is also desirable to have a system that delivers a predetermined portion of the soup into a serving container with a minimal amount of personal attention and skill.

One method of heating and dispensing soup is disclosed in U.S. Patent No. 3,200,999 to Price. An elevated bowl is provided with heating coils and thermostats that function to cook the soup and then keep it heated at an appropriate serving temperature. An agitator in the bowl serves to keep the soup mixed. The bowl feeds into an unheated valve that comprises a valve housing and a frusto-conical rotor having a cavity therein and dispensing ports. The rotor is manually rotated to a fill position permitting soup to flow into the rotor cavity. The rotor is then turned to its dispense position and the soup flows into a serving container placed below.

Commercial use of automated soup dispensing apparatus require that the apparatus meet appropriate sanitary (National Sanitation Foundation) standards. This means all parts of the apparatus that normally come in contact with the soup must be heated to reduce the possibility of spoilage. This includes the valve mechanism since soup contacts it and, in fact, resides in the rotor cavity during the dispensing operation. In systems known to the applicant, such as Price, heating of the valve is not possible, because heating causes the rotor to expand and seize within the valve housing.

Hence, it is an object of this invention to provide a soup dispensing apparatus with a valve mechanism that can be heated and function properly, so that the dispensing apparatus can meet sanitation standards.

Another disadvantage of existing soup dispensing apparatus is the inability to efficiently store and deliver soups that contain solid matter or garnish (cut up meat, vegetables, etc.). This is because the soup reservoir may not be able to keep the garnish properly dispersed in the soup, or the valve mechanism may impede the delivery of garnish when the soup is dispensed from the reservoir.

It is, therefore, a further object of this invention to provide a soup dispensing apparatus with a storage reservoir that facilitates the proper dispersal of garnish in the soup, and a valve mechanism that does not impede the delivery of the garnish with the soup, so that the soup may be dispensed with an appropriate amount of undamaged garnish.

As with any food storage and preparation device, it is necessary to have a means for emptying and cleaning the soup dispensing apparatus when it is turned off at the end of the day or after it has been in use for an extended period of time.

Therefore, it is an additional object of this invention to provide a soup dispensing apparatus with a reservoir that can be conveniently emptied.

It is another object of this invention to provide a soup dispenser where all parts that come into contact with the soup are easily accessible for cleaning.

Because soups need to be cooked, then kept heated to serving temperature, stirred and finally dispensed, it is necessary, in the usual case, to have food service personnel devote a significant effort to these various soup preparation and dispensing steps. This activity consumes time and provides an opportunity for human error.

A further object of this invention is to provide a novel soup dispensing apparatus with an electric control system that automates the cooking, storing and dispensing of the soup so that human involvement with these activities is minimal.

## Summary of the Invention

The foregoing and other objects of the invention are achieved by providing a soup dispenser with a heated reservoir and a paddle therein to stir the soup. The reservoir is in communication with a heated dispensing valve. The dispensing valve contains a rotor with seals that prevent the soup from leaking yet allow the rotor to turn when heated. A set of ports allow the soup to be dispensed in controlled portions or emptied in total from the reservoir. An electrical system controls the heating of the reservoir and of the valve, the stirring action of the paddle, and the movement of the valve between blocked, dispensing and emptying positions.

## Brief Description of the Drawings

Figure 1 is a front perspective view of a preferred embodiment of the invention.

Figure 2 is a cross sectional view along the line 2-2 of Figure 1.

Figure 3 is a cross sectional view along the lines 3-3 of Figure 2.

Figure 4 is an exploded view of the valve according to the first embodiment.

Figure 5 is a view similar to Figure 2 on a larger scale.

Figure 6 is a plan view taken along line 6-6 of Figure 5.

Figures 7-10 are views taken along the lines 7-7 of Figure 5 showing the various positions of the rotor.

Figure 11 is a view similar to Figures 7-10 showing an alternate embodiment of the rotor.

Figure 12 is a block diagram of the electrical circuit of the invention.

Figure 13 is a time line operating diagram of the dispense cycle and the stand-by cycle.

Figure 14 is a time line diagram for the dump cycle.

## Detailed Description

The embodiment of the invention herein disclosed can be analyzed as having three interacting elements. The first is a reservoir wherein soup is cooked and kept properly mixed and heated. The second is the heated valve which serves to dispense the soup in predetermined portions. The last is the electrical system which controls the cooking, heating and stirring of the soup and the rotation of the valve.

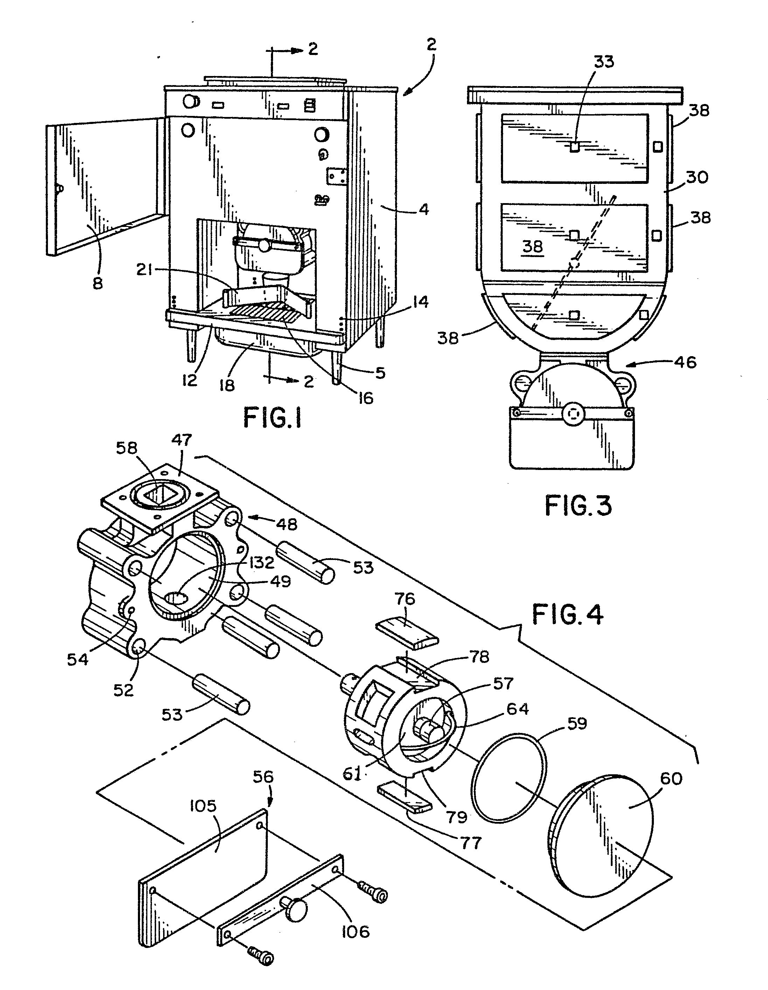

Referring to Figure 1, an embodiment of the invention is disclosed. The soup dispenser 2 is housed in a stainless steel or similar non-corrosive cabinet of generally rectangular cross-section. The cabinet 4 is elevated on feet 5 so that the area under the dispenser is easily accessible for cleaning.

A cover 8 is hingedly attached to one side of the cabinet to enclose the control switches not associated with normal operation.

An adjustably mounted serving shelf 12 is located in the lower portion of the soup dispenser. A plurality of studs extending from the serving shelf fix it to the dispenser via mounting holes 14.

The serving shelf includes a drip pan opening having a wire grill 16 disposed there across. A drip pan 18 is located below the opening.

Attached to the top of the serving shelf is a container alignment bracket 21 generally having a V-shape. The bracket is adjustably fastened to the serving shelf by bracket pins engaged in holes in the shelf on either side of the drip pan opening.

Referring to Figures 2 and 3, a tank 30 is located in the upper portion of the cabinet. The tank is comprised of an upper tank section 30a having a generally rectangular cross-section and a lower tank section 30b having inwardly tapered walls terminating in a tank discharge chute 31 having an interior wall with a generally square cross section. The tank is provided with a cover 32 having an interlock switch associated therewith to shut off the electrical heaters and stir paddle if the cover is removed. Along the inside wall of the tank are sets of temperature sensors; one set in the top, one in the middle; and a third set in the lower portion of the tank. Bonded to the outside of the tank are corresponding sets of heating elements 38, one set of elements at the top, one in the middle, and a third in the lower portion of the tank. The elements are preferably composed of nichrome foil or other suitable material.

Located inside the tank is a stirring paddle comprising two paddle blades 43 symmetrically located around a paddle shaft 44. The stirring paddle is detachably mounted to a paddle drive shaft 45 that protrudes into the tank and connecting pin 46 on the paddle drive shaft. The paddle drive shaft is connected via a gear box 201 to a stirring motor 203. The paddle is located near the bottom of the upper tank section so that paddle rotation subtends an area in both the upper and lower tank sections.

As illustrated in Figures 2 and 3, the tank is disposed on a valve 46 and secured thereto by bolting to a valve mounting flange 47 located at the top of the valve as seen in Figure 4. The valve is comprised of a valve housing 48 with a cylindrical valve cavity 49 in which a cylindrical rotor 50 is inserted. An inlet port 58 passes through the top of the valve housing and has a generally square cross secton. A valve discharge port 132 having a generally circular cross section passes through the bottom of the valve housing. The valve housing is a casting formed of heat conductive metal. The casting preferably includes a set of four cavities 52 dimensioned to receive therein a waterproof heating element 53, such as a "calrod". The elements are friction mounted, adhesively secured, or otherwise firmly secured in the cavities. The casting also includes two horizontally aligned cover plate mounts 54 each with a threaded bore to receive and secure a cover plate assembly 56.

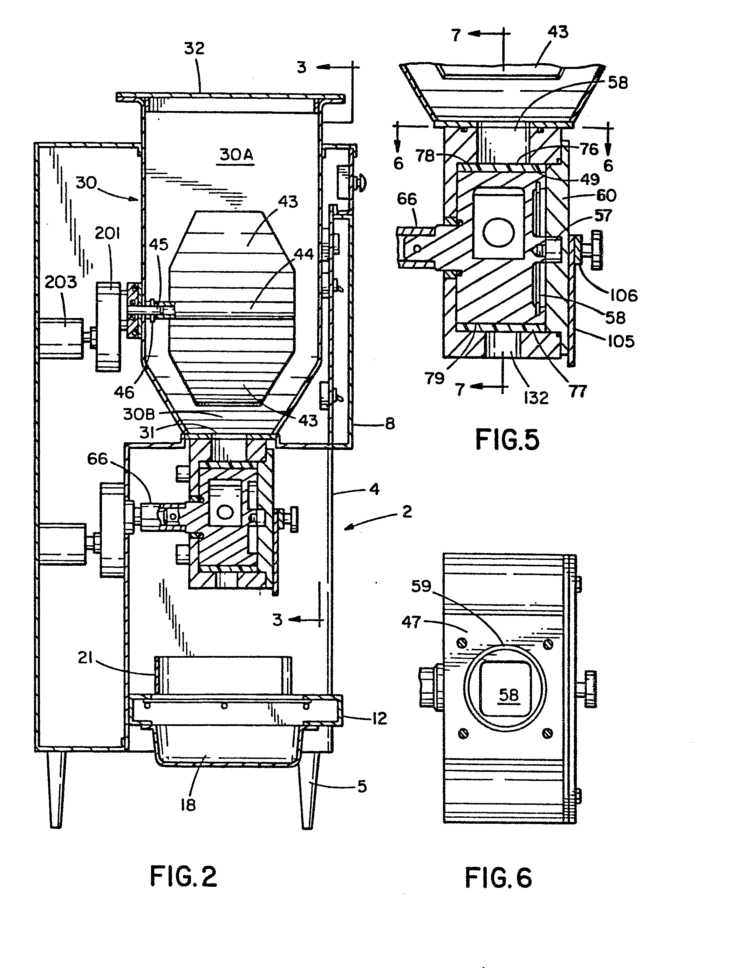

As shown in Figure 6, a water tight seal is maintained between the tank and the valve by an O-ring 59 recessed in the top of the valve and which surrounds the rectangular valve port 58.

A first embodiment of the rotor 50, illustrated in Figures 4 and 5, has a body composed of stainless steel or other non-corrosive material with a low coefficient of thermal expansion. The rotor body is cylindrical with a diameter marginally less than the diameter of the valve cavity 49. One end of the body is provided with a stub shaft 57 mounted in a bearing for rotation when the rotor is placed in the housing. A handle 64 for withdrawing the rotor from the housing is pivotally secured to said one end. When the handle is not in use it is stored in a recess 58. An O-ring 59 seals the cover 60 against the housing 48.

A drive shaft 66 extends outwardly from the other end of the rotor body. The drive shaft engages a motor (Figure 2) to permit rotation of the rotor between the various positions utilized to operate the dispenser. For that purpose the end of the shaft has a pin passing therethrough which is received in the motor drive in a conventional manner.

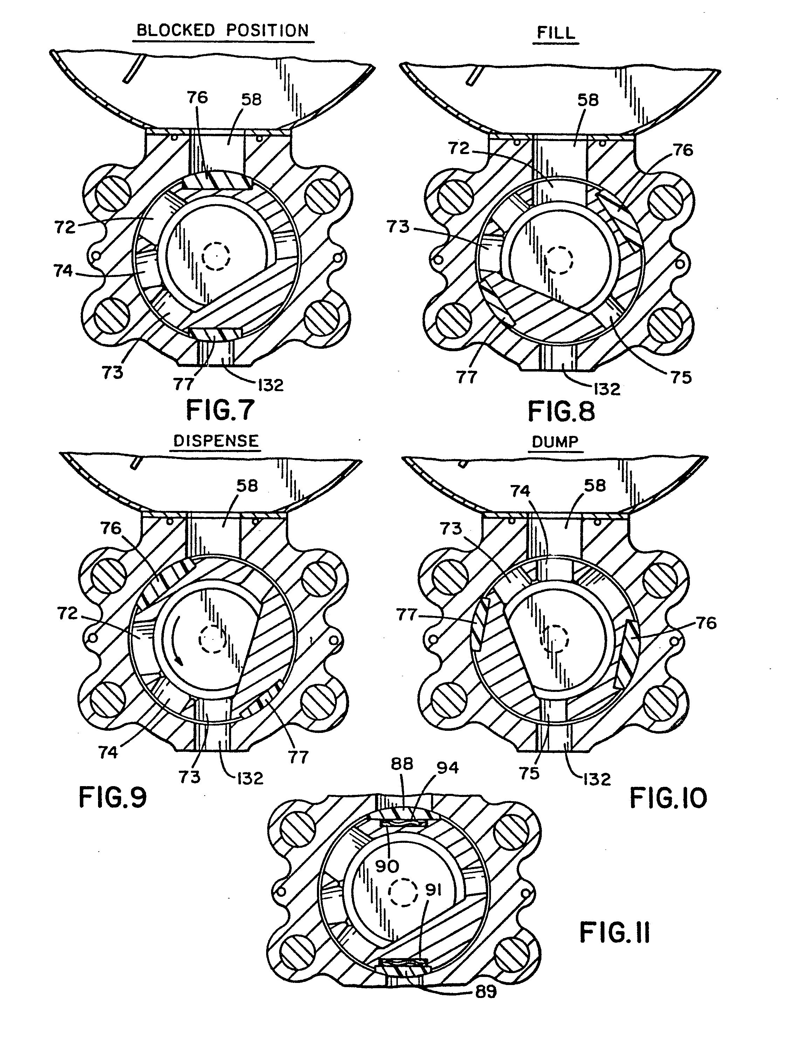

As shown in Figure 7, the rotor body defines a cavity 70 generally cylindrical but including a straight section 71 for a purpose to be described. The volume of the cavity is chosen equal to the portion of soup to be dispensed during operation of the invention. Thus, a plurality of rotors having identical outside dimensions but different cavity dimensions are contemplated whereby, for example, the user can dispense 6, 8, 10 or 12 ounce portions of soup.

Referring to Figure 7, the rotor includes a fill port 72 having a generally square cross-section and subtending the same area as the valve body inlet port 58. Ninety degrees from the fill port is a dispense port 73 having a circular cross-section approximately equal in diameter to the valve body outlet port 132. Located between the fill port and the dispense port is a tank dump inlet port 74. Aligned directly opposite the dump inlet port is the dump outlet port 75.

Positioned in suitably dimensioned channels 78 and 79 in the rotor body are rotor seals 76 and 77. Each is larger than the corresponding port in the valve housing such that when the seals are disposed thereover (Figure 7) fluid flow is prevented. The seals are composed of Teflon or other similar material with a low coefficient of friction.

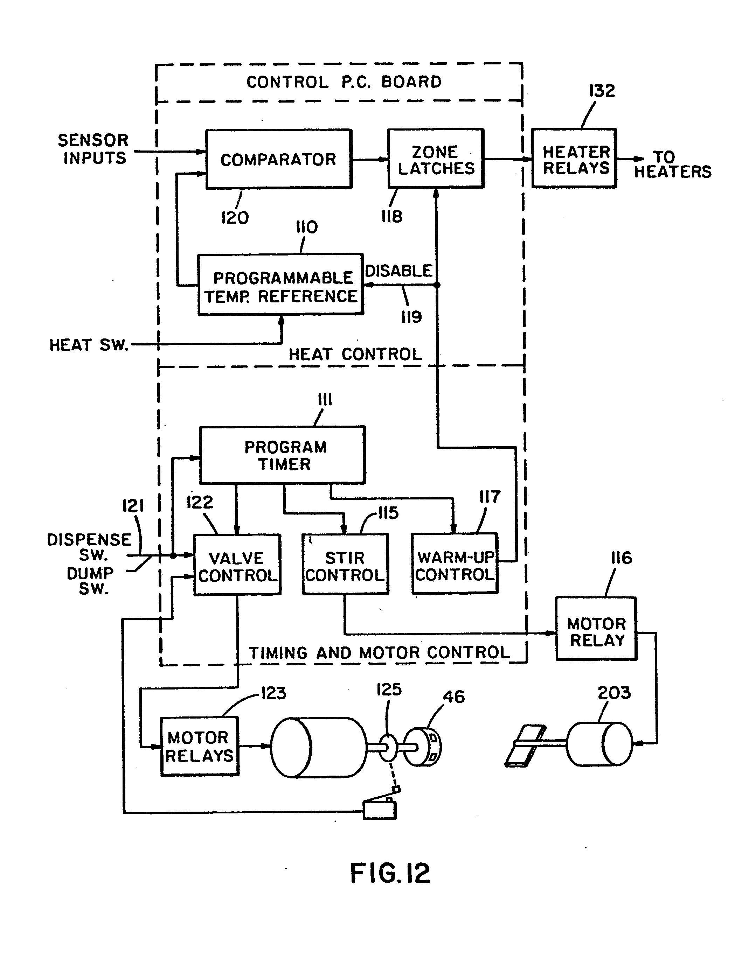

A second embodiment of a rotor is illustrated in Figure 11. This rotor is comprised of aluminum or other non-corrosive material with a relatively higher coefficient of expansion than the embodiment of Figure 7. Since the valve is heated it must be of a smaller diameter for the same size housing.

The aluminum rotor has an upper seal 88 and a lower seal 89 located in the same position, having the same width and composed of the same material as the rotor seals of the first embodiment. However, due to the smaller diameter of the aluminum rotor, the seals are secured in the rotor differently. The seals are located in channels 90 and 91 as before, however, in each channel a wave spring 94 of circular cross-section, preferably composed of stainless steel or other resilient, non-corrosive material, is provided. The wave springs, seated in a recess, exerting an outward force on the rotor seals to maintain sealing contact with the interior surface of the valve housing.

Figure 4 illustrates the complete valve assembly. To assemble the valve the rotor is inserted into the valve housing cavity so that the drive shaft is engaged by the valve motor. The coupling elements insure that the rotor can only be inserted into the housing and coupled to the motor in the proper orientation, that is, the upper rotor seal channel 78 is located below the valve housing inlet port and the lower rotor seal channel 79 is above the outlet port. In the first embodiment of the rotor the valve seals 76 and 77 are then inserted into the rotor channels. (In the second embodiment the wave springs are first placed in the wave spring bores, the rotor seals are inserted into the rotor seal channels, and the rotor then inserted into the valve cavity.) An O-ring seal 59 and rotor cover plate 60 are then placed over the front portion of the rotor.

After the valve elements are inserted into the valve housing, a valve cover plate assembly 56, comprised of a cover plate 105 and a horizontally aligned cross bar 106, is inserted over the valve housing. The cross bar is mounted over the cover plate by fastening studs secured to the housing.

Figure 12 is a block diagram of the electrical circuit that controls the operation of the soup dispenser. The two main systems are a programmable temperature reference circuit 110 that controls the heating elements, and a program timer circuit 111 that controls valve rotation, the stirring paddle and the initial heating of the soup.

When the soup dispenser is assembled, as previously described, soup is placed in the tank and power is supplied. This starts the counter function of the program timer 111.

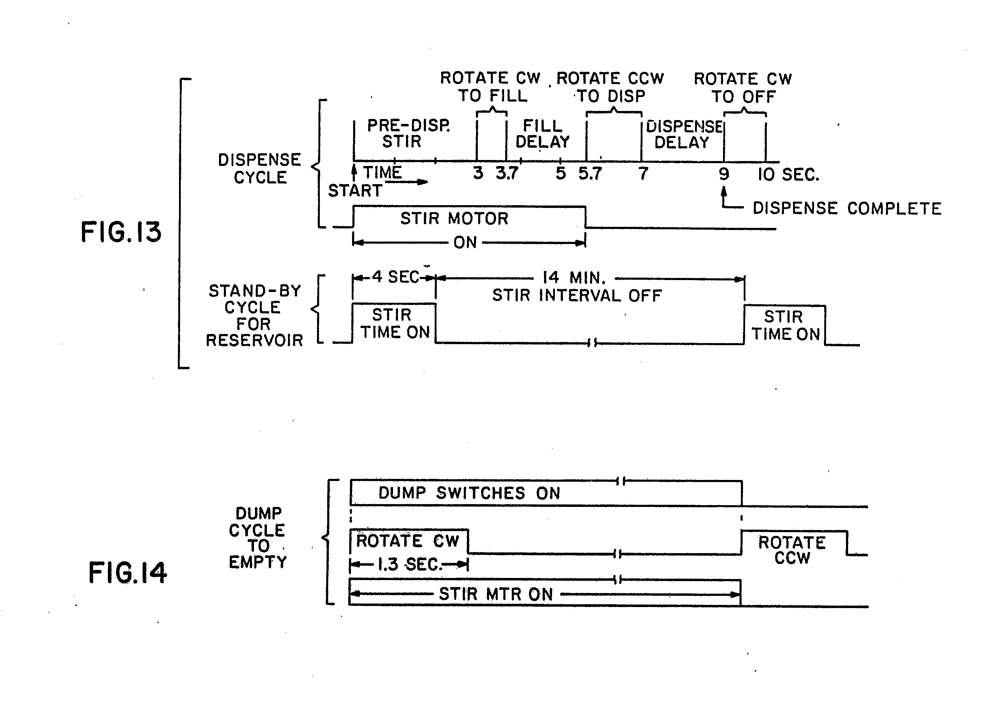

The timer 111 is connected to a stir control circuit 115 which operates motor relay 116 to drive the stirring motor 203. The stir control circuit is activated during the periods illustrated in Figure 13. For example, when the dispenser is in the stand-by mode the stir motor will operate 4 seconds out of every 844 seconds. During the dispensing mode stirring occurs before and during the valve movement to insure the desired mix of liquid and garnish.

When power is first supplied to the system the program timer activates a warm-up control circuit 117 that serves to heat the initial batch of soup to serving temperature without scorching. The heat control circuit activates the tank heating elements to raise the tank temperature to a selected value in the range of $165^{\circ}$-$180^{\circ}F$. During this period the temperature reference 110 is periodically disabled by the warm-up control 117 via line 119. This interrupts heating to prevent temperature overshoot during the initial heating cycle which might scorch the soup. Typically the initial heating period might be 14 minutes during which the heaters could be on a 20% duty cycle. After the warm-up is complete, warm-up circuit 117 is deactivated by the program timer and the temperature reference 110 is fully enabled.

After the warm-up cycle the timer enters the stand-by mode (Figure 13), and the tank heating elements are controlled solely by the programmable temperature reference 110. The tank temperature sensors 33 generate a voltage corresponding to the detected temperature. A comparator circuit 120 averages the voltages for each level in the tank, and compares them to a reference voltage supplied by the programmable temperature reference circuit 110. Preferably the soup in the tank is maintained at approximately $165^{\circ}F$. In the stand-by mode when the average temperature of the lower tank section drops below the minimum allowable temperature, the comparator operates selected zone latches until the average temperature of the tank equals the desired temperature.

The valve housing sensor and heating elements are similar to but function independently of the tank sensor and heating elements. The valve housing thermistor signal is processed by a temperature comparator circuit (not shown), which closes a heating latch to energize the heating elements 53 as necessary to maintain a desired valve temperature (usually 155$^{\circ}$F.).

The operation of the circuit during the dispense cycle is illustrated in Figure 13. When the dispense switch 121 is depressed the dispense cycle is triggered. The dispense cycle starts with a pre-dispense stir for several seconds to mix the garnish followed by rotation of the valve rotor clockwise via valve control 122 and relay 123, so that the rotor fill port is aligned with the housing inlet port (Figure 8). The exact positioning of the rotor is controlled by limit switches 124 in communication with a rotor cam 125. After the valve is in the fill position there is a fill delay period to permit soup and garnish to enter the rotor cavity. The length of the delay is controlled by the program timer 111. During both the rotation and the delay period stirring continues so that the garnish is evenly distributed.

At the completion of the fill delay period the stirring motor is deactivated, and the valve control rotates the rotor counter-clockwise so that the rotor dispense port is aligned with the valve outlet port (Figure 9). A dispense delay period then begins, again as determined by the program timer. At the end of the dispense delay period the valve control moves the rotor clockwise to the initial, blocked position (Figure 7).

The tank dump cycle is shown in Figure 14. To prevent accidental initiation, two switches must be closed simultaneously to start the dump cycle. Initiation of the dump cycle activates the stirring motor on a continuous basis and moves the rotor clockwise until the dump ports of the rotor communicate with the housing ports (Figure 10). After the dump cycle the rotor moves counterclockwise to the initial closed position.

In use the seals carried by the rotor are positioned over the inlet and outlet ports. Preferably the valve heating elements are turned on for a short period before soup is placed into the tank. This heating causes expansion of the rotor and insures the seals are well positioned against the valve housing to prevent excessive leakage.

After the seals have been established, soup is put into the tank. Closing the main power switch initiates the warm-up heating cycle, so the initial batch of soup will cook properly. At the end of the warm-up heating cycle the soup is ready for serving. Operating the dispense switch initiates the dispense cycle. The inside of the rotor has a straight portion 80 which serves as funnel-like dispensing aid to insure the garnish accompanies the liquid out of the rotor cavity.

During the first dispense cycle, a thin film of soup is formed on the outside rotor wall due to designed in seepage and serves as a noncontaminating lubricant. The design of the seals and their position blocking the ports prevents leakage during standby operation. This self-lubricating feature, along with the low friction rotor seals, serve to insure that the rotor will turn easily within the valve cavity, unlike the prior art, even though the valve is heated and substantial leakage is prevented.

While the soup is stored in the tank during the standby cycle it will be kept at the appropriate temperature for serving. The stir control will periodically turn the stirring paddle so that the garnish stays proportionally dispersed in the soup (Figure 13). The two bladed stirring paddle reduces garnish damage while the inwardly tapered shape of the lower tank portion enhances the circulation of the soup near the bottom of the tank causing garnish that may have settled to become agitated and disperse upwardly.

To clean the soup dispenser it is necessary to empty it but there is no need to remove the tank as with the prior art. An appropriate container is placed under the outlet port. The serving shelf can be removed to facilitate this operation. Both dump switches are depressed, causing the rotor to align the dump ports so that a straight through passage is created for the soup (Figure 10). The stirring paddle is operated during the dump mode to keep the garnish from clogging the valve or the tank discharge chute. The tank can then be cleaned using standard food service cleaning practices and soaps. The detachable stirring paddle can easily be removed for cleaning as can the drip pan detachably mounted to the serving shelf. By removing the cover plate 56 the valve can be removed making the various interior surfaces of the valve easily accessible for cleaning. The rotor can be pulled out of the valve by the handle attached thereto.

While we have described a dispensing apparatus for the heating of and portion control delivery of liquid foods such as soups, it will be seen that with little or no modification the apparatus can be used for the storing and portion control delivery of other liquids, such as chemical being processed, that needed to be kept heated to a specific temperature.

While we have shown and described embodiments of this invention in some detail, it will be understood that this description is offered merely by way of example, and the invention is to be limited in scope only by the appended claims.

## CLAIMS

1. A portion controlled dispenser for liquids comprising:

(a) a tank for storing liquids having a dispensing opening at the bottom thereof;

(b) a dispensing valve secured to the tank in communication with said opening, said valve comprising:

(i) a valve housing having a cylindrical cavity therein and inlet and outlet ports for communicating liquid to and from the cavity,

(ii) a cylindrical rotor disposed in said cavity, said rotor having a hollow interior, and at least one port for conveying liquid into and out of said interior, the volume of said interior determining the volume of liquid to be dispensed, said rotor having a slightly smaller outside diameter than the diameter of the housing cavity whereby liquid seepage into the annular space defined therebetween permits the formation of a lubricating film of liquid between the housing and the rotor,

(iii) low friction sealing means carried by the rotor for sealing the ports of said valve housing when disposed thereover and for preventing excessive seepage in said annular space when not so disposed;

(c) means for sequentially positioning said rotor relative to said housing to permit liquid to enter the rotor interior from the tank via the housing inlet port, and to exit the rotor interior via the housing outlet port.

2. A dispenser according to Claim 1 wherein said liquid is intended for human consumption and said dispenser further includes:

means for heating the valve to a temperature sufficient to retard the growth of bacteria in the liquid passing through the valve or which seeps into said annular space.

3. The dispenser according to Claim 2 wherein said heating means includes:

(a) heating elements positioned in thermal relation with said valve;

(b) sensors for detecting the temperature of said valve;

(c) circuit means for operating said heating elements responsive to said sensors to maintain said valve at a selected temperature.

4. A dispenser according to Claim 1 wherein said liquid is intended for human consumption and said dispenser further includes:

means for heating said tank to a first temperature to prepare the liquid and thereafter maintain the liquid at a desired serving temperature.

5. The dispenser according to Claim 4 wherein the tank heating means includes:

(a) heating elements positioned in thermal relation with said tank;

(b) sensors for detecting the temperature of the tank;

(c) circuit means for operating said heating elements responsive to said sensors to prepare the liquid by heating it to said first temperature and thereafter to maintain it at said serving temperature.

6. The dispenser according to Claim 1 wherein the liquid has solid particles contained therein, said tank including:

(a) stirring means for evenly distributing the particles in the liquid;

(b) control means for operating the stirring means at selected intervals including during dispensing of liquid from the tank to evenly dispense the solids in the liquid.

7. The dispenser according to Claim 1 wherein said rotor has a fill port and a dispense port arranged therethrough so that only one of said ports at a time communicates with a port in said valve housing whereby liquid enters the rotor interior through the fill port when the fill port communicates with the housing inlet port and liquid leaves the rotor when the dispense port communicates with the housing outlet port.

8. The dispenser according to Claim 1 wherein said rotor has a pair of dump ports arranged so that when one of said dump ports communicates with the inlet port in said valve housing the other dump port communicates with the housing outlet port whereby a straight through path is created to rapidly empty the liquid in the tank.

9. The dispenser according to Claim 7 wherein said rotor also has a pair of dump ports arranged so that when one of said dump ports communicates with the inlet port in said valve housing the other dump port communicates with the housing outlet port whereby a straight through path is created to rapidly empty the liquid in the tank.

10. The dispenser according to Claim 1 wherein said sealing means include a pair of seals formed of a low friction material extending above the circumference of the rotor to engage the housing, one seal being positioned over each of the housing ports when the valve is not dispensing liquid from the tank.

11. The dispenser according to Claim 1 wherein said rotating means includes:

(a) a motor coupled to said rotor;

(b) circuit means, responsive to operator input, for causing the motor to sequentially move the rotor to selected positions.

12. A portion controlled dispensing valve for liquids comprising:

(a) a valve housing having a cylindrical cavity therein and inlet and outlet ports for communicating liquid to and from the cavity,

(b) a cylindrical rotor disposed in said cavity, said rotor having a hollow interior, and at least one port for conveying liquid into and out of said interior, the volume of said interior determining the volume of liquid to be dispensed, said rotor having a slightly smaller outside diameter than the diameter of the housing cavity whereby liquid seepage into the annular space defined therebetween permits the formation of a lubricating film of liquid between the housing and the rotor,

(c) low friction sealing means carried by the rotor for sealing the ports of said valve housing when disposed thereover and for preventing excessive seepage in said annular space when not so disposed;

(d) means for sequentially positioning said rotor relative to said housing to permit liquid to enter the rotor interior via the housing inlet port, and to exit the rotor interior via the housing outlet port.

13. A valve according to Claim 12 wherein said liquid is intended for human consumption and said dispenser further includes:

means for heating the valve to a temperature sufficient to retard the growth of bacteria in the liquid passing through the valve or which seeps into said annular space.

14. The valve according to Claim 13 wherein said heating means includes:

(a) heating elements positioned in thermal relationship with said valve;

(b) sensors for detecting the temperature of said valve;

(c) circuit means for operating said heating elements responsive to said sensors to maintain said valve at a selected temperature.

15. The valve according to Claim 12 wherein said rotor has a fill port and a dispense port arranged therethrough so that only one of said ports at a time communicates with a port in said valve housing whereby liquid enters the rotor interior through the fill port when the fill port communicates with the housing inlet port and liquid leaves the rotor when the dispense port communicates with the housing outlet port.

FIG.1

FIG.3

FIG.4

**FIG.2**

**FIG.5**

**FIG.6**

0196739

3 / 5

BLOCKED POSITION

FIG.7

FILL

FIG.8

DISPENSE

FIG.9

DUMP

FIG.10

FIG.11

FIG.12

## FIG.13

**DISPENSE CYCLE**

ROTATE CW TO FILL    ROTATE CCW TO DISP    ROTATE CW TO OFF

PRE-DISP. STIR    FILL DELAY    DISPENSE DELAY

↑ TIME →
START

3   3.7    5   5.7    7      9    10 SEC.

↑
└─ DISPENSE COMPLETE

STIR MOTOR
←———— ON ————→

**STAND-BY CYCLE FOR RESERVOIR**

←4 SEC→      ←——————— 14 MIN. ———————→
STIR INTERVAL OFF

STIR TIME ON            STIR TIME ON

## FIG.14

**DUMP CYCLE TO EMPTY**

DUMP SWITCHES ON

ROTATE CW            ROTATE CCW
←1.3 SEC.→

←———— STIR MTR ON ————→